# EUROPÄISCHE PATENTSCHRIFT

(11) **EP 1 909 925 B1**
(45) Veröffentlichungstag und Bekanntmachung des Hinweises auf die Patenterteilung: **18.02.2009**
(21) Anmeldenummer: 06776471.2
(22) Anmeldetag: 27.07.2006
(51) Int. Cl.: A63B 43/00

(54) **Vorrichtung und Verfahren zum Messen einer auf ein bewegliches Spielgerät ausgeübten Schusskraft**
Device and method for measuring the force of a shot to which a movable gaming device is subjected
Dispositif et procédé permettant de mesurer une force d'un coup exercée sur un appareil de jeu mobile

(30) Priorität: 29.07.2005 DE 102005036355
(43) Veröffentlichungstag der Anmeldung: 16.04.2008
(73) Patentinhaber: Cairos Technologies AG, 76307 Karlsbad (DE)
(72) Erfinder: KUENZLER, Udo, 76307 Karlsbad (DE); ENGLERT, Walter, 88483 Burgrieden (DE)
(74) Vertreter: Grünecker, Kinkeldey, Stockmair & Schwanhäusser Anwaltssozietät
(86) Internationale Anmeldenummer: PCT/EP2006/007458
(87) Internationale Veröffentlichungsnummer: WO 2007/014700

(56) Entgegenhaltungen:
- EP-A- 1 232 772
- WO-A-20/05044396
- DE-A1- 10 338 620
- US-A- 4 577 865
- US-A- 5 779 576
- US-A- 6 151 563
- US-B1- 6 582 330

## Beschreibung

Die vorliegende Erfindung bezieht sich auf bewegliche Vorrichtungen und insbesondere Spielgeräte, wie beispielsweise Bälle sowie auch Konzepte zur Erfassung eines Kontakts eines Objekts zu der beweglichen Vorrichtung.

Seit geraumer Zeit besteht bei unterschiedlichen Interessengruppen das Anliegen, bewegte Objekte bzw. Personen in ihrem Bewegungsablauf studieren bzw. diesen nachvollziehen zu können, was die exakte Angabe der Position des Objekts örtlich und zeitlich voraussetzt. Von besonderem Interesse sind hierbei unter anderem Spielbälle insbesondere in kommerzialisierten Sportarten, wie z.B. die im dreidimensionalen Raum hoch beschleunigten Fußbälle ebenso wie Tennis-oder Golfbälle. Die Fragestellung, wer das bespielte Objekt zuletzt berührt hat, wie es getroffen wurde und in welche Richtung es weiterbeschleunigt wurde, kann dabei abhängig von der Spielart für den Ausgang des Spiels entscheidend sein.

Spielgeräte, die im Hochleistungssport eingesetzt werden wie z.B. Tennisbälle, Golfbälle, Fußbälle und dergleichen, lassen sich inzwischen auf extrem hohe Geschwindigkeiten beschleunigen, so dass die Erfassung des Objekts während der Bewegung eine sehr differenzierte Technologie erfordert. Die bislang eingesetzten technischen Mittel - vorwiegend Kameras - genügen den oben dargestellten Erfordernissen nicht oder nur ungenügend; auch die bislang bekannten Verfahren zur Positionsbestimmung mittels unterschiedlicher Sender- und Empfängerkombinationen lassen noch einen großen Spielraum bezüglich der räumlichen Auflösung der Positionsangaben, bezüglich der Handhabbarkeit der benötigten Sender/Empfängerkomponenten und vor allem bezüglich der Auswertung der mittels Sender/Empfängersystem erhaltenen Daten, so dass eine schnellstmögliche Bewertung der aus diesen Daten erhaltenen Ergebnisse noch nicht möglich ist oder zumindest sehr aufwendig ist.

Nicht nur im kommerziellen Sport, in dem bewegliche Spielgeräte eingesetzt werden können, sondern auch im privaten Bereich sind die Benutzer immer mehr an elektronische Geräte gewohnt, die diverse Informationen anzeigen, um einem Benutzer ein Feedback dahin gehend zu gehen, wie er auf einen Gegenstand eingewirkt hat, oder um ihm Informationen darüber zu geben, wie ein Spieler auf ein bewegliches Spielgerät eingewirkt hat.

So arbeiten derzeitige Statistikverfahren in kommerziellen Anwendungen, wie beispielsweise der Fußball-Bundesliga damit, dass relativ einfache Statistiken ausgezeichnet werden, wie beispielsweise der prozentuale Ballkontakt einer Mannschaft oder die Anzahl von Ecken, Freistößen oder Fouls.

Andererseits gibt es insbesondere im Tennis, wo ein sehr planbares übersichtliches Umwelt mit nur zwei Akteuren existiert, Einrichtungen, die z. B. die Geschwindigkeit des Tennisballs beim Aufschlag messen, derart, dass ein Zuschauer in der Lage ist, einzuschätzen, ob ein Aufschlag "hart" oder "weich" war.

Problematisch an solchen Geschwindigkeitsmessungen, die durch optische Verfahren stattfinden können, ist, dass sie in einem Umfeld nicht funktionieren, in dem ein "Gewühle" von Akteuren existiert, wie beispielsweise auf einem Fußballfeld, wo nicht nur zwei Personen agieren, sondern 22 Personen agieren, die zudem noch nicht - wie beim Tennis zum Aufschlag - an nahezu demselben Platz stehen, sondern beliebige Konstellationen auf dem Spielfeld einnehmen können. Andererseits ist es besonders beim Fußball sowohl für das Feedback der Spieler im Training als auch für die Zuschauer interessant, wie eigentlich ein Schuss stattgefunden hat bzw. wie groß eine Schusskraft war.

So stellt das Schießen eines Balls beim Fußball oder beim Tennis die eigentliche gewissermaßen "Basis"-Einwirkung auf das Spielgerät dar, die immer dafür entscheidend ist, wie ein Spiel weitergeht, da es letztendlich immer darum geht, mit dem beweglichen Spielgerät irgendetwas zu tun, es beispielsweise in ein generisches Feld zu spielen (wie im Tennis) oder in ein Tor zu bringen (wie im Fußball) oder in einen Korb zu bringen (wie im Basketball) oder in einem gegnerischen Spielfeld zur Bodenberührung zu bringen (wie im Volleyball). Aufgrund der Schwierigkeiten der sich ständig verändernden Konstellationen bei dynamischen, insbesondere Mannschaftsspielen, jedoch auch beim Tennis, wenn gerade kein Aufschlag gespielt wird, sondern der Ball in einem Spielzug gespielt wird, werden externe Geschwindigkeitsmessungen versagen, was dazu geführt hat, dass derzeit keine flexibel einsetzbaren Schusskrafterfassungssysteme existieren.

Andererseits gilt für den Sportbereich aber auch für den Freizeitbereich eine weitere Einschränkung, die sich daraus ergibt, dass diese Bereiche hochkommerzialisiert sind. So müssen sämtliche Systeme, die Zusatzinformationen liefern, insbesondere, wenn sie für den Freizeitbereich oder für den Freizeit-Sportbereich gedacht sind, zu einem niedrigen Preis anbietbar sein, da es sich hier um Gegenstände handelt, die ein Benutzer nie "unbedingt braucht", aber vielleicht doch gern hätte. Insbesondere in einem solchen Markt ist es entscheidend, dass ein System preiswert und gleichzeitig robust angeboten werden kann. So darf ein System nicht wartungsintensiv sein oder ein großes Maß an Gerätschaften fordern, wie beispielsweise eine Geschwindigkeitsmessungsanlage zur Messung des Aufschlags eines Tennisspielers. Aufgrund der damit verbundenen relativ hohen Kosten würde ein kleiner Tennisverein niemals eine derartige Anlage zu Trainingszwecken anschaffen, was noch vielmehr für einen Privatmann geht, der in seiner Freizeit etwas ambitionierter Tennisspielen möchte.

Aus WO 2005/044396 A ist ein Ball als bewegliches Spielgerät bekannt, mit einer Vorrichtung zum Messen einer auf das bewegliche Spielgerät ausgeübten Schusskraft, mit folgenden Merkmalen: einer Einrichtung zum Liefern eines bei einer Einwirkung auf das Spielgerät durch einen Gegenstand auftretenden zeitlichen Verlaufs eines Innendrucks des Spielgeräts; einer Einrichtung zum Verarbeiten des zeitlichen Verlaufs des Innendrucks, um ein Energiemaß zu erhalten, das von einer durch den Schuss auf den Gegenstand übertragenen Energie abhängt, und einer Einrichtung zum Liefern einer Information über die Schusskraft basierend auf dem Energiemaß. Der Ball weist im Inneren eine tragende Struktur auf, an die die Vorrichtung, in Form einer Sendevorrichtung sowie optional einem Beschleunigungs- und/oder Drucksensor, angebracht ist. Die Sendeeinrichtung sendet die Signale zu externen Antennen, wodurch sowohl die Kraft eines Schusses, die Beschleunigung des Balles und, für den Fall, dass zusätzlich äußere Antennen vorgesehen sind, auch die Position des Balles erfasst werden kann. Es ist vorgesehen, die Bewegung des Balles auf einem Bildschirm, vorzugsweise durch eine Leuchtspur, zu visualisieren.

Die Aufgabe der vorliegenden Erfindung besteht darin, ein flexibel einsetzbares und dennoch aufwandsarmes Konzept zum Messen einer auf ein bewegliches Spielgerät ausgeübten Schusskraft zu schaffen.

Diese Aufgabe wird durch eine Vorrichtung zum Messen einer auf ein bewegliches Spielgerät ausgeübten Schusskraft gemäß Patentanspruch 1, ein Verfahren zum Messen einer auf ein bewegliches Spielgerät ausgeübten Schusskraft gemäß Patentanspruch 12, ein Computerprogramm gemäß Anspruch 13, oder ein bewegliches Spielgerät gemäß Patentanspruch 11 gelöst.

Die vorliegende Erfindung basiert auf der Erkenntnis, dass eine genaue, wartungsarme und gleichzeitig flexibel einsetzbare Schusskraftmessung dadurch erreicht werden kann, wenn ein zeitlicher Verlauf einer Beschleunigung oder ein zeitlicher Verlauf eines Innendrucks eines beweglichen Spielgeräts geliefert wird, um dann diesen zeitlichen Verlauf zu verarbeiten, und zwar mit dem Ziel, ein Energiemaß zu erhalten, das von einer durch den Schuss auf den Gegenstand übertragenen Energie abhängt. Ferner wird eine Einrichtung zum Liefern einer Information über die Schusskraft vorgesehen, welche zur Schusskraftbestimmung das Synergiemaß verwendet. Erfindungsgemäß wird somit keine direkte Geschwindigkeitsmessung vorgenommen, sondern bei bevorzugten Ausführungsbeispielen höchstens eine indirekte Geschwindigkeitsmessung, dahingehend, dass ein zeitlicher Beschleunigungsverlauf und ein zeitlicher Druckverlauf erfasst wird und dieser zeitliche Verlauf verarbeitet wird, um ein Energiemaß zu erhalten, also irgendeine Größe, die in irgendeiner Weise linear oder nicht-linear oder auf irgendeine andere Art und Weise mit der Energie zusammenhängt. Dieses Maß wird dann erfindungsgemäß verwendet, um eine Schusskraftinformation zu liefern. Diese Schusskraftinformation kann ein quantitativer, aber einheitenfreier Wert z. B. auf einer Skala zwischen 1 und 10 sein oder aber kann ein Wert auf einer nach oben offenen Skala sein oder kann ein Wert für eine auf das bewegliche Spielgerät zum Zeitpunkt des Schusses ausgeübte Kraft sein oder kann ein Energiewert sein, also ein Wert für die Energie, die beim Schuss in das bewegliche Spielgerät hineingebracht worden ist.

Alternativ kann die Schusskraft auch eine Längenanzeige sein, die ein Maß dafür liefert, wie weit der Ball beispielsweise geflogen wäre, wenn der Ball im optimalen Winkel und ohne Rotation abgeschossen worden wäre. Ein solches Schusskraftergebnis ist insbesondere für Ballsportarten interessant, wie Fußball oder American Football, da dort die Spieler intuitiv mehr mit einem Längenmaß, wie weit z. B. ein Pass oder Abschlag gegangen wäre, anfangen können, als mit quantitativen Werten oder physikalischen Kraft- oder Energieeinheiten. Für den Vergleich mit anderen Spielern ist jedoch auch die einheitenlose quantitative Skala egal ob geschlossen oder nach oben offen von hohem Interesse.

Bei bevorzugten Ausführungsbeispielen wird ferner eine Ballkontakterfassung vorgenommen. Hierbei können verschiedene Komponenten für beide Aufgaben eingesetzt werden. Hierzu ist die Verwendung von zwei Signalen, die unterschiedliche Signalgeschwindigkeiten haben, optimal, um eine robuste und dennoch effiziente und genaue Erfassung eines Kontakts mit einer beweglichen Vorrichtung zu erreichen. Erfindungsgemäß wird von einem Detektor in der beweglichen Vorrichtung, also z.B. in einem Fußball, erfasst, ob sich in der Nähe des Fußballs ein Objekt befindet, wie beispielsweise das Bein eines Fußballspielers. Dies geschieht z. B. durch eine Druck-, Beschleunigungs- oder Erschütterungsmessung oder auch durch eine berührungslose Messung.

Sobald erfasst worden ist, dass sich in der Nähe der beweglichen Vorrichtung das Objekt befindet, wird das Sendermodul angesteuert, um zwei Signale auszusenden, die unterschiedliche Signalgeschwindigkeiten haben. Eine mit dem Objekt verbundene Empfängervorrichtung erfasst das erste Signal und wartet dann eine bestimmte Zeit lang auf den Empfang des zweiten Signals mit langsamerer Signalgeschwindigkeit. Wird das Signal mit langsamerer Signalgeschwindigkeit innerhalb des vorbestimmten Zeitraums, der mit dem Empfang des ersten schnellen Signals beginnt, erfasst, so wird davon ausgegangen, dass das Objekt, das sowohl das erste als auch innerhalb des vorbestimmten Zeitraums das zweite Signal empfangen hat, einen Kontakt mit der beweglichen Vorrichtung hatte. Dies wird dadurch wiedergegeben, dass ein Detektor, der den Empfang des zweiten Signals im vorbestimmten Zeitraum detektiert hat, ein Detektorausgangssignal liefert, wobei dann von einem Speicher gespeichert wird, dass es ein Detektorausgangssignal gegeben hat, dass es also (sehr wahrscheinlich) einen Ballkontakt gegeben hat. Alternativ oder zusätzlich kann ein absoluter Zeitpunkt, zu dem es das Detektorsignal gegeben hat, im Speicher gespeichert werden, so dass sich, wenn man an ein Fußballspiel denkt, eine Folge von Zeitpunkten ergibt, die dann z.B. nach einem Spiel oder während eines Spiels ausgelesen werden können, um davon abhängig festzustellen, wie viel Ballkontakte ein Spieler hatte bzw. allgemein gesagt, wie viel Kontakte ein Objekt mit der beweglichen Vorrichtung hatte.

Wenn davon ausgegangen wird, dass sich z.B. mehrere Fußballspieler in der Nähe des Balls befinden, so wird das schnelle Signal von mehreren Empfängervorrichtungen detektiert werden. Ist die vorbestimmte Zeitdauer jedoch so gewählt, dass mit hoher Wahrscheinlichkeit nur wirklich die Empfängervorrichtung, die am nächsten zur beweglichen Vorrichtung angeordnet ist, innerhalb des vorbestimmten Zeitraums das zweite Signal empfangen kann, während weiter entfernt befindliche Empfängervorrichtungen zwar ebenfalls das zweite Signal empfangen, allerdings nach Verstreichen der vorbestimmten Zeitdauer, so wird für diese Spieler kein Ballkontakt registriert.

Durch Einstellen der vorbestimmten Zeitdauer in den Empfängervorrichtungen, die vom Spieler getragen werden, kann somit die Genauigkeit bzw. die Reichweite eingestellt werden, die erfasst werden soll. Kein Zugriff auf den Ball selbst ist hierzu erforderlich.

Ferner ermöglicht die Verwendung von zwei Signalen unterschiedlicher Geschwindigkeit, dass im Ball selbst keine komplizierte und damit fehleranfällige Elektronik benötigt wird. Es muss lediglich dafür gesorgt werden, dass der Ball einen Nähedetektor hat, der berührungs-gesteuert oder berührungslos arbeitet, der dann die Aussendung der beiden Signale unterschiedlicher Laufzeiten steuert. Im Ball selbst ist daher keine komplizierte Elektronik nötig, was insbesondere deswegen von erheblichem Vorteil ist, da die auf den Ball drückenden Kräfte und Beschleunigungen immens sein können, so dass für Elektronik im Ball ein sehr raues Umfeld existiert.

Auf Empfängerseite werden keine persönlichen Identifikationen oder etwas Ähnliches benötigt, was, insbesondere wenn daran gedacht wird, dass es sich um ein Massenprodukt handelt, dass also viele Spieler mit Empfängervorrichtungen versehen werden sollen, von erheblichem Vorteil ist, da somit alle Empfängervorrichtungen identisch arbeiten können und keinerlei spezielle Identifikation benötigen, was auch die Empfängervorrichtungen einfach und wartungsarm bzw. sogar ganz wartungsfrei macht. Außerdem wird durch einen einfachen und robusten Aufbau auch die Manipulationssicherheit gewährleistet.

Bevorzugte Ausführungsbeispiele der vorliegenden Erfindung werden nachfolgend Bezug nehmend auf die beiliegenden Zeichnungen detailliert erläutert. Es zeigen:

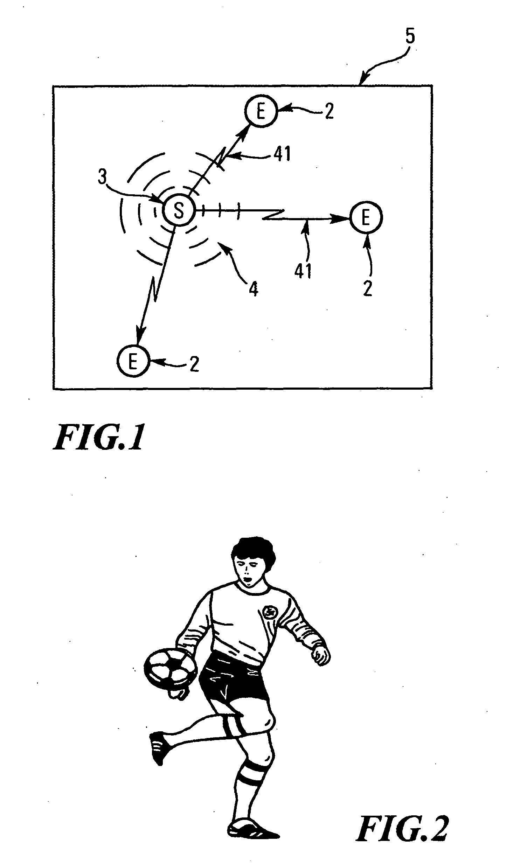

- Fig. 1: eine schematische Skizze eines Spielfelds mit ei- ner beweglichen Vorrichtung und mehreren mit Emp- fängern versehenen Objekten;
- Fig. 2: einen Spieler mit einem Fußball als Beispiel für eine bewegliche Vorrichtung;
- Fig. 3: eine schematische Systemskizze;
- Fig. 4a: eine detailliertere Ansicht der Funktionsgruppen in der beweglichen Vorrichtung;
- Fig. 4b: eine detailliertere Darstellung des Sendermoduls von Fig. 4a;
- Fig. 5a: eine Blockschaltbilddarstellung der Empfängervor- richtung; und
- Fig. 5b: eine detailliertere Darstellung der Empfängervor- richtung von Fig. 5a;
- Fig. 6a: einen qualitativen schematischen Verlauf der Be- schleunigung über der Zeit während eines Schus- ses;
- Fig. 6b: einen qualitativen Verlauf der Geschwindigkeit über der Zeit während eines Schusses;
- Fig. 6c: einen qualitativen Verlauf der Kraft, die auf das bewegliche Spielgerät ausgeübt wird, während ei- nes Schusses,
- Fig. 6d: einen qualitativen Verlauf der Kraft als Funktion der Wegstrecke, die während eines Schusses auf ein bewegliches Spielgerät ausgeübt wird;
- Fig. 6e: eine bevorzugte Zuweisungstabelle zwischen dem Energiemaß und der Schusskraft;
- Fig. 7: einen qualitativen Verlauf des Innendrucks eines beweglichen Spielgeräts;
- Fig. 8: eine Geradenschar zur Bestimmung der Schusskraft mit dem Ruhe-Innendruck als Parameter;
- Fig. 9: ein schematisches Blockschaltbild der erfindungs- gemäßen Vorrichtung zum Messen einer auf ein be- wegliches Spielgerät ausgeübten Schusskraft; und
- Fig. 10: ein Ablaufdiagramm für eine bevorzugte Schuss- kraftmessung mittels eines zeitlichen Druckver- laufs.

Um die Geschicklichkeit beim Ballspiel zu verbessern oder sich mit anderen Spielern vergleichen zu können, müssen objektive Daten auf einfache Art und Weise gewonnen werden. Diese müssten so visualisiert werden, dass ein Trainings Feedback oder ein Vergleich mit anderen Spielern möglich ist. Dazu sind entsprechende Komponenten im Spielgerät und ein Datenerfassungsgerät bedarfsweise mit Anzeigeeinheit vorgesehen.

Bei einem preiswerten System kann die Erkennung der Person nicht über Laufzeiten der Funksignale erfolgen. Hierzu müssten die eintreffenden Funksignale mit einer hoch genauen Zeitreferenz verglichen werden. Außerdem müsste ein Netzwerk aufgebaut werden, in dem alle gemessenen Zeiten verglichen werden, um den am dichtesten zum Ball stehenden Spieler zu ermitteln. Daher wird nun aus der Aussendung eines Funksignals und eines akustischen Signals darauf geschlossen, wer den letzten Ballkontakt hatte.

Durch Messung der auf das Spielgerät einwirkenden Kräfte kann auch auf die Schusskraft oder die Rotationsgeschwindigkeit des Spielgeräts geschlossen werden. Erfolgt dabei eine Energiebetrachtung kann der einzelne Spieler, seine Einwirkung auf das Spielgerät kontrollieren lernen.

Weitere Vorteile ergeben sich aus den weiteren Ansprüchen und Unteransprüchen und der folgenden Beschreibung.

Bevor die Erfindung im Detail beschrieben wird ist darauf hinzuweisen, dass sie nicht auf die jeweiligen Bauteile der Vorrichtung oder die erläuterte Vorgehensweise beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn in der Beschreibung und in den Ansprüchen die Einzahl oder unbestimmte Artikel verwendet werden, beziehen sich diese auch auf die Mehrzahl dieser Elemente, solange nicht der Gesamtzusammenhang eindeutig etwas anderes deutlich macht. Dasselbe gilt in umgekehrter Richtung.

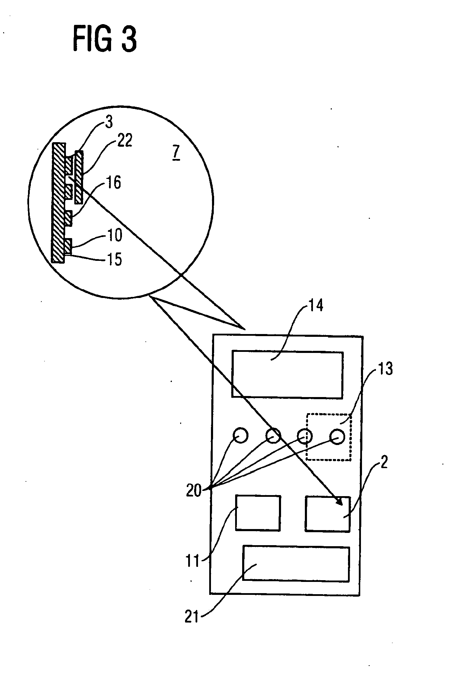

Figur 3 zeigt eine schematische Systemskizze. Insbesondere zeigt sie eine Vorrichtung zur Erfassung der Kraft-und/oder Bewegungsverhältnisse an einem Spielgerät 7, wie einem Ball, wobei in dem Ball eine Baugruppe 15 vorgesehen ist, die mit mehreren elektronischen Komponenten bestückt ist. Anstelle der Baugruppe können die elektronischen Komponenten auch auf der Umhüllung des Balls zum Beispiel innenseitig oder durch eine Aufhängung in der Mitte des Balls angeordnet sein.

In dem Spielgerät ist wenigstens eine der folgenden elektronischen Komponenten vorgesehen:
- ein Sender 4 für Schall- oder Ultraschallwellen zur Aussendung eines akustischen Signals,
- ein Drucksensor 10,
- ein Beschleunigungssensor,
- wenigstens ein Hall-Sensor 16,
- wenigstens zwei magnetoresistive Sensoren,
- wenigstens zwei Spulen.

Über den Sender 4 für die Schall- oder Ultraschallwellen oder über wenigstens einen Funksender 3 stehen die elektronischen Komponenten zum Beispiel über Funk 1 mit einem Empfänger 2 in Verbindung, um zum Beispiel die von den elektronischen Komponenten erfassten Daten zu übermitteln. Ferner ist ein Mikrocontroller 11 zur Aufbereitung der Daten vorgesehen. Diese Daten können dann an ein Datenerfassungsgerät 12 übermittelt werden. Eine Auswerteeinheit 13 ist zur Auswertung der erfassten Daten vorgesehen, die bedarfsweise auf einer Anzeigeeinheit 14 dargestellt werden. Das Datenerfassungsgerät 12 ist vorzugsweise wenigstens einem Spieler 6, vorzugsweise jedoch allen Spielern eines Spiels zugeordnet, um dadurch zum Beispiel eine Ortung des nächstliegenden Spielers vorzunehmen, wie weiter unten noch erläutert wird.

Bei manchen Spielern, wie zum Beispiel bei einem Fußballspiel ist es häufig interessant zu wissen, wer die meisten Ballkontakte hatte. Um dies zu bestimmen, muss während des Ballkontakts festgestellt werden, wer den Ball berührt hat.

Bei einem preiswerten System kann die Erkennung der Person nicht über Laufzeiten der Funksignale erfolgen. Hierzu müssten die eintreffenden Funksignale mit einer hochgenauen Zeitreferenz verglichen werden und es müsste ein Netzwerk aufgebaut werden, in dem alle gemessenen Zeiten verglichen werden, um den am dichtesten zum Ball stehenden Spieler zu ermitteln. Alternativ könnte die Feldstärke des Senders am Ball verwendet werden, um eine Abstand abzuschätzen. Dies ist allerdings ungenau.

Um die Kosten niedrig zu halten, wird in der Vorrichtung die Laufzeit des Schalls gemessen. Hierzu gibt das Spielgerät 7 beim Erkennen einer Krafteinwirkung ein akustisches Signal als Schall- oder Ultraschall durch einen Sender 4 ab. Zeitgleich sendet ein Funksender 3 ein Funksignal. Der Empfänger 2 eines Datenerfassungsgerätes, das dem Spieler 6 zugeordnet ist, registriert das akustische Signal und auch das Funksignal. Die Zeitdifferenz ergibt den Abstand zum Ball. Sobald das Funksignal erkannt wird, wird 5 ms auf das Eintreffen des akustischen Signals gewartet. Wird in dieser Zeit ein Schallimpuls erkannt, kann man davon ausgehen, dass der Empfänger 2 des dem Spieler 6 zugeordneten Datenerfassungsgerät 12 maximal 1,5 Meter vom Ball entfernt ist. Dieser Spieler hat dann mit großer Wahrscheinlichkeit den Ball berührt. Vorzugsweise trägt jeder Spieler 6 solch einen Empfänger. Die Anzahl der erkannten Schallimpulse wird gezählt und angezeigt. Mit Hilfe dieser Information und der Uhrzeit des Ereignisses kann bei einem späteren Zusammenspiel aller Daten aller Datenerfassungseinheiten 12 festgestellt werden, wie viele Ballkontakte ein Spieler 6 hatte. Es ist sogar möglich, statistische Aussagen darüber zu treffen, wie erfolgreich Ballabgaben waren, da das Ziel einer Ballabgabe durch einen Zeitvergleich ermittelbar ist. Damit kann zum Beispiel erfasst werden:
- Wer hat den Ball wie oft an den Gegner verloren?
- Waren die Ballkontakte über die Spielzeit konstant und gab es einen Leistungseinbruch?
- Wer hat wen wie oft angespielt?
- Wie oft ging ein Spielzug über mehrere Spieler der gleichen Mannschaft?

Die Auswerteeinheit 13 hat damit Mittel zur Beurteilung, ob innerhalb einer vorbestimmten Zeit nach Eingang des Funksignals ein akustisches Signal des Senders 4 für Ball oder Ultraschallwellen eingeht.

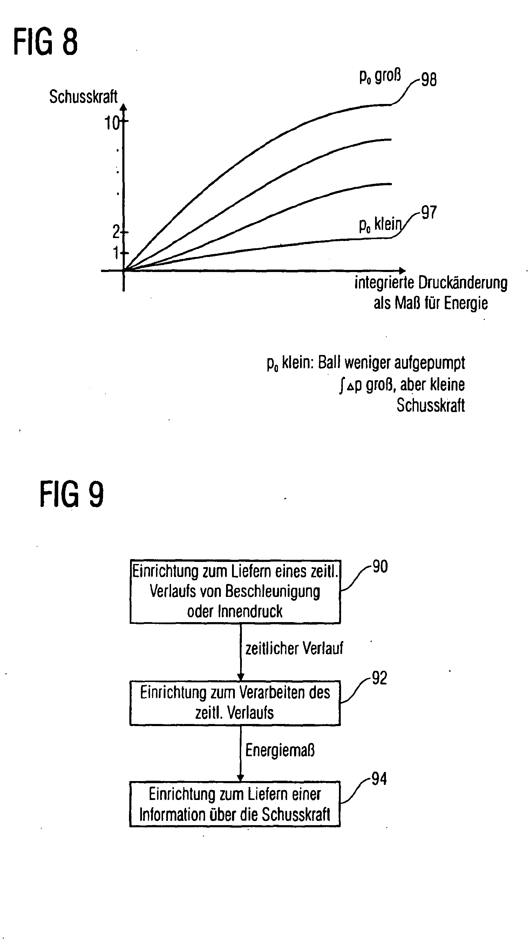

Eine erfindungsgemäße Vorrichtung zum Messen einer auf ein bewegliches Spielgerät ausgeübten Schusskraft ist in Fig. 9 gezeigt. Die Vorrichtung umfasst eine Einrichtung 90 zum Liefern eines bei einer durch einen Schuss verursachten Einwirkung auf das Spielgerät auftretenden zeitlichen Verlaufs einer Beschleunigung oder eines (Innen-) Drucks eines beweglichen Spielgeräts.

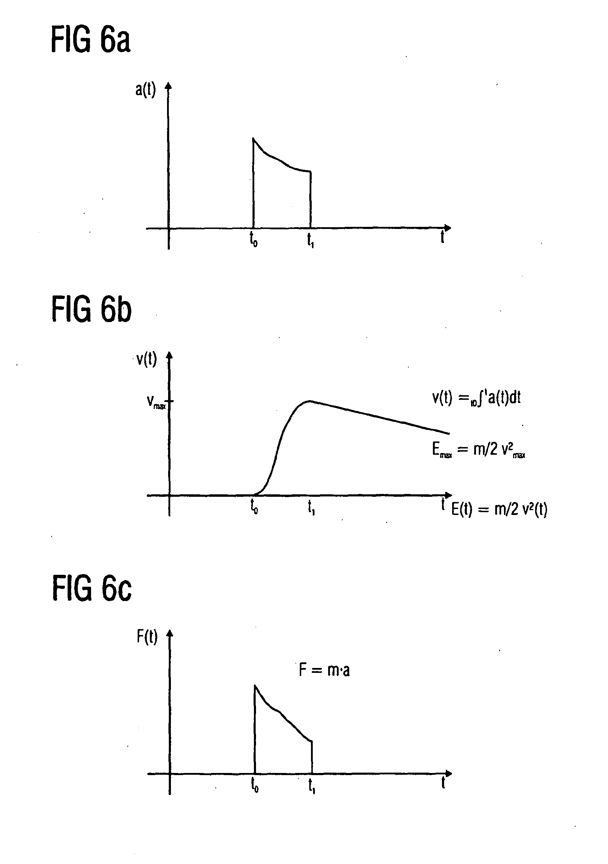

Je nach Sportart ist der Gegenstand, der auf das bewegliche Spielgerät einwirkt, ein Tennisschläger, ein Bein eines Fußballspielers, eine Hand eines Handballspielers, ein Tischtennisschläger etc., wenn das bewegliche Spielgerät ein Ball ist. Aufgrund der Tatsache, dass ein Gegenstand im Rahmen eines Schusses auf das bewegliche Spielgerät einwirkt, wird eine Beschleunigung auf das bewegliche Spielgerät ausgeübt, die dann, wenn davon ausgegangen wird, dass das bewegliche Spielgerät vorher im Ruhezustand war, gleich Null war, und zu einem Zeitpunkt t₀, zu dem der Gegenstand auf das Spielgerät auftrifft, ruckartig ansteigen wird, um dann, wie es in Fig. 6a gezeigt ist, abzufallen, und zwar bis zum Zeitpunkt t₁, zu dem das bewegliche Spielgerät den Gegenstand, der auf das bewegliche Spielgerät eingewirkt hat, verlässt.

Dieser Abfall zum Zeitpunkt t₁ kann wieder mehr oder weniger abrupt sein, oder es kann auch der Fall auftreten, bei dem sich der Beschleunigungsverlauf a(t) relativ "weich" dem Nullwert annähert, bei dem dann eine konstante Geschwindigkeit erreicht ist, welche dann, aufgrund der Abbremsung durch Luftreibung irgendwann negativ wird. Die Abbremsung des beweglichen Spielgeräts durch Reibung oder Auffanggegenstände sind für die Schusskraftmessung zunächst unerheblich, oder abhängig von der Definition der Schusskraft zu berücksichtigen. Der letztere Fall tritt ein, wenn beispielsweise als Schusskraft eine Länge in Metern angegeben wird, die ein Fußball fliegen würde. Dann wäre die Abbremsung des Spielgeräts durch Luftreibung zu berücksichtigen, und zwar bei der Berechnung der Information über die Schusskraft basierend auf dem Energiemaß.

Im Einzelnen umfasst die in Fig. 9 gezeigte Vorrichtung eine Einrichtung 92 zum Verarbeiten des zeitlichen Verlaufs der Beschleunigung oder des zeitlichen Verlaufs des Innendrucks, um ein Energiemaß zu erhalten, das von einer durch den Schuss auf den Gegenstand übertragenen Energie abhängt. Dieses Energiemaß kann z.B. die Geschwindigkeit zum Zeitpunkt t₁ sein, die durch den Schuss auf das bewegliche Spielgerät ausgeübt worden ist. Eine solche Situation ist in Fig. 6b gezeigt. Wenn wieder davon ausgegangen wird, dass sich der Gegenstand zum Zeitpunkt t₀ im Ruhezustand befunden hat, so wird seine Geschwindigkeit aufgrund der zum Zeitpunkt t₀ ausgeübten Beschleunigung ansteigen und bis zum Zeitpunkt t₁ zunehmen. Zum Zeitpunkt t₁ verlässt der Fußball beispielsweise das Bein des Fußballspielers, und es ist eine Maximalgeschwindigkeit Vₘₐₓ erreicht, die dann aufgrund der Luftreibung wieder abnehmen wird. Die Momentangeschwindigkeit zum Zeitpunkt t zwischen t₀ und t₁ kann ohne Weiteres durch die in Fig. 6b rechts gezeigte Gleichung aktuell berechnet werden.

Ein bevorzugtes Energiemaß ist jedoch die Maximalgeschwindigkeit zum Zeitpunkt t₁, da diese Energie - von einer potentielle Energie abgesehen, die typischerweise vernachlässigbar sein wird - die Energie ist, die der Spieler auf das Spielgerät übertragen hat. Hat der Spieler viel Energie übertragen, so ist seine Schusskraft hoch. Hat der Spieler dagegen wenig Energie übertragen, so war seine Schusskraft niedrig, vorausgesetzt, dass für beide Fälle sonstige Umstände des Spielgeräts, beispielsweise der Innendruck vergleichbar sind, wie es noch bezugnehmend auf Fig. 8 detailliert erläutert wird.

Die Einrichtung 92 kann also z.B. die Maximalgeschwindigkeit als Energiemaß berechnen oder sogar, unter Verwendung der Ballmasse, die Energie berechnen, die der Maximalgeschwindigkeit zugeordnet ist und als Eₘₐₓ bezeichnet wird.

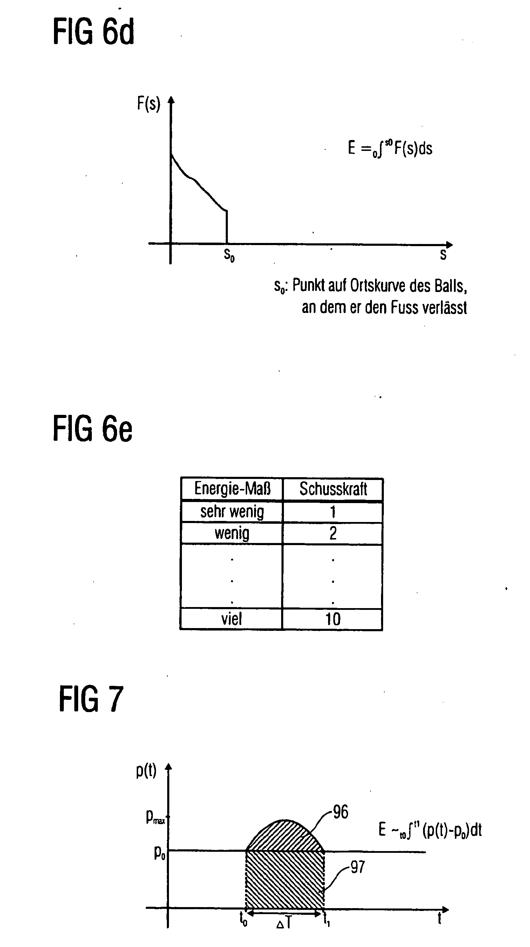

Die in Fig. 9 gezeigte Vorrichtung umfasst ferner eine Einrichtung 94 zum Liefern einer Information über die Schusskraft basierend auf dem Energiemaß. Die Funktionalität der Einrichtung 94 wird anhand von Fig. 6e erläutert und kann in diesem Fall einfach eine Zuweisungstabelle sein, die das berechnete Energiemaß in eine Skala z. B. zwischen 1 und 10, wie im Fall von Fig. 6e oder in eine nach oben offene Skala oder auch in eine Trendanzeige abbildet.

Eine Trendanzeige würde darin bestehen, dass ein Vergleich des aktuellen Energiemaßes mit einem vorher bestimmten Energiemaß, das einem anderen Spieler zugeordnet war; vorgenommen wird, um dann als Trendanzeige also als Informationen über die Schusskraft sagen zu können, dass die Schusskraft des aktuellen Spielers größer, gleich oder kleiner als die Schusskraft des vorherigen Spielers war.

Eine solche Abbildung des Energiemaßes auf eine Schusskraftinformation kann mit beliebigen Energie-Maßen vorgenommen werden, also auch z. B. dann, wenn die Kraft, wie sie in Fig. 6c als Verlauf über der Zeit gezeigt ist, ausgewertet wird. So ist der Kraftverlauf zum Beschleunigungsverlauf proportional, und zwar mit der Masse des beweglichen Spielgeräts als Proportionalitätskonstante. Auch der Verlauf der Kraft über der Zeit gibt ein Energiemaß, das z. B. durch Integration der Kraft über der Zeit berechnet werden könnte.

Alternativ kann auch, wie es in Fig. 6d gezeigt ist, die auf den Ball ausgeübte gerichtete Kraft als Funktion der Ortskurve, auf der sich der Ball während des Schusses bewegt, gemessen werden. So wird die Kraft zum Ortspunkt x = 0, an dem der Ball liegt, bevor er durch das Bein des Spielers getroffen wird, auf einen hohen Wert ansteigen, der bis zu einem bestimmten Wert fällt. Der Ball verlässt am Ortspunkt s₀ auf der Ortskurve den Fuß des Spielers, so dass auf den Ball keine Antriebskraft mehr ausgeübt wird, sondern nur noch auf der Luftreibung vorhandene Abbremskräfte, die jedoch in Fig. 6d nicht berücksichtigt sind.

Ein Energiemaß stellt somit auch die Integration der gemessenen Kraft (Beschleunigung) über der Ortskurve, die der Ball zurücklegt, dar. Die Ortskurve kann beispielsweise gleichzeitig mit dem Beschleunigungssensor in dem Ball gemessen werden, wenn der Beschleunigungssensor ein dreidimensional arbeitender Beschleunigungssensor ist, der zudem richtungssensitiv ist. Alternativ kann die Ortskurve eines Flugkörpers auch durch andere Arten und Weisen berechnet werden, wie beispielsweise durch hochgenaue satelliten- oder bodengestützte Ortungssysteme oder auch durch Zugreifen auf vorbestimmte Tabellen. Jedoch auch mikromechanische Ortungssysteme unter Verwendung von Vibrationsgyroskopen können zur Bestimmung der Ortskurve eingesetzt werden, um das in Fig. 6 gezeigte Integral numerisch auswerten zu können.

Das bevorzugte Ausführungsbeispiel der vorliegenden Erfindung besteht jedoch darin, in dem beweglichen Spielgerät einen Drucksensor vorzusehen. Wenn das bewegliche Spielgerät geschossen wird, könnte es einen Druckverlauf haben, wie er in Fig. 7 qualitativ gezeigt ist. Zu einem Zeitpunkt t₀ trifft der Gegenstand auf das bewegliche Spielgerät, was zu einem Druckanstieg in dem beweglichen Spielgerät führen wird, da das bewegliche Spielgerät durch den auf das bewegliche Spielgerät aufschlagenden Gegenstand verformt wird. Dieser Druckanstieg wird bis zum einem Maximaldruck pₘₐₓ ansteigen und dann wieder abnehmen, um in der Gegend von Zeitpunkt t₁, der dadurch gekennzeichnet ist, dass das bewegliche Spielgerät keinen Kontakt mehr zu dem Gegenstand hat, wieder auf den Ruhedruck abzusinken.

Erfindungsgemäß wurde herausgefunden, dass das Integral über die Druckänderung, also der Flächeninhalt der in Fig. 7 schraffiert gezeichneten Fläche, mit der auf den Ball ausgeübten Energie zusammenhängt, so dass der zeitliche Verlauf des Drucks vorteilhafterweise zur Schusskraftbestimmung eingesetzt werden kann.

Die Verwendung eines Drucksensors ist im Vergleich zu einem Beschleunigungssensor besonders vorteilhaft, da der Drucksensor einfach und im Vergleich zu einem Beschleunigungssensor, der z. B. Massen an Biegebalken hat, robust ausgestaltet sein kann. Ferner ist es für einen Drucksensor inhärent, dass er, wenn er innerhalb des beweglichen Spielgeräts angeordnet ist, keine gerichtete Größe, sondern eine richtungsunabhängige Größe ausgibt, was bei Beschleunigungssensoren nur durch eine aufwändige Bereitstellung eines Beschleunigungssensorarrays, das in drei Raumrichtungen sensitiv sein muss, erreicht werden könnte. Dagegen reicht ein einziger Drucksensor aus, um einen Druckverlauf des Innendrucks des beweglichen Spielgeräts zu liefern.

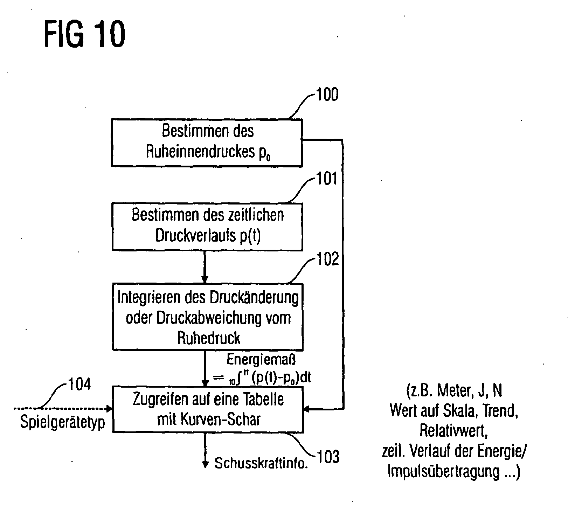

Die Verwendung eines Drucksensors schafft somit eine wartungsfreie, robuste und zugleich preisgünstige Möglichkeit, um den Druckverlauf in einem beweglichen Spielgerät zu messen, und um dann, wie es noch bezugnehmend auf die Fig. 8 und 10 dargelegt wird, eine Schusskraftinformation zu erhalten.

Bei einem bevorzugten Ausführungsbeispiel der vorliegenden Erfindung wird der Druckverlauf über der Zeit zwischen t₀ und t₁ integriert, und zwar gemäß der Gleichung, wie sie in Fig. 7 gezeigt ist. Daraus ist ersichtlich, dass nicht der absolute Druckverlauf, sondern der Verlauf der Druckänderung im Vergleich zum Ruhedruck p₀ integriert wird. Allerdings könnte auch der absolute Druckverlauf integriert werden, um dann die Fläche 97 nach der Integration zu subtrahieren. Diese ergibt sich einfach aus dem Produkt der Zeitdauer Δt und dem Ruhedruck.

Wie es aus Fig. 8 ersichtlich ist, hängt die Schusskraft stark davon ab, wie hoch der Ruhedruck ist. Dies ergibt sich aus Fig. 8 aufgrund der verschiedenen Parameterkurven, wobei eine Parameterkurve 97 für einen kleinen Ruhedruck p₀ eingezeichnet ist, während eine andere Parameterkurve für einen hohen Druck p₀ bei 98 eingezeichnet ist. Insbesondere stellt die x-Achse der Kurvenschar von Fig. 8 die integrierte Druckänderung als Maß für die Energie dar, also - in physikalischen Einheiten berechnet, ein Maß, das als Einheit (Pascal x Sekunden) hat. Anschaulich gesprochen ist über der x-Achse die Fläche 96 der in Fig. 7 gezeigten Kurve aufgetragen. Wenn von einem Ball ausgegangen wird, der einen kleinen Innendruck hat, so ergibt sich je nachdem, wie fest der Ball getroffen wird, wie groß also die Schusskraft ist, ein Schusskraftwert entlang der Gerade. Wird dagegen mit einem stark aufgepumpten Ball gespielt, so ist bei derselben integrierten Druckänderung als Maß für die Energie im Vergleich zu Kurve 97 bereits eine sehr viel höhere Schusskraft erhalten worden. Dies liegt daran, dass ein stark aufgepumpter Ball auch durch einen sehr starken Schuss wenig verformt wird, während ein sehr schwach aufgepumpter Ball bereits durch einen relativ leichten Schuss stark verformt wird, wobei die Verformung mit der integrierten Druckänderung korrespondiert.

Alternativ oder zusätzlich kann auch der Maximaldruck pₘₐₓ des Druckverlaufs über der Zeit durch die Einrichtung 92 von Fig. 9 bestimmt werden. Für einfachere Auswertungen kann nämlich angenommen werden, dass der Verlauf des Drucks über der Zeit, also wie der Schuss auf den Gegenstand einwirkt, für alle Schüsse etwa gleich angenommen werden, derart, dass dann der Maximalwert allein entscheidend ist. In diesem Fall würde eine Geradenschar bereitgestellt werden, die ähnlich zu der Kurvenschar in Fig. 8 ist, die jedoch als x-Achse nicht eine integrierte Druckänderung als Maß für die Energie hätte, sondern den Maximaldruck.

Wieder alternativ könnte man auf die Zeitdauer des Verlaufs der Druckabweichung bestimmen, die dann, wenn, typische Druckverläufe im Hinblick auf ihre Form angenähert gleich genommen werden, ebenfalls ein Maß für die Energie ist, die während des Schusses auf das Spielgerät aufgebracht worden ist.

Bei einem bevorzugten Ausführungsbeispiel der vorliegenden Erfindung wird somit, wie es in Fig. 10 dargestellt ist, zunächst der Ruheinnendruck p₀ in einem Schritt 100 bestimmt. Diese Bestimmung kann entweder vor oder nach dem Schuss stattfinden und wird dazu verwendet, um eine der Kurven in der Kurvenschar von Fig. 8 auszuwählen. Ferner wird die Druckänderung in einem Schritt 102 über der Zeit integriert, und zwar vom Zeitpunkt t₀ bis zum Zeitpunkt t₁ unter Verwendung des in einem Schritt 101 bestimmten zeitlichen Druckverlaufs p(t). Die Integration über der Druckänderung oder über der Druckabweichung vom Ruhedruck, die in Fig. 102 ausgeführt wird, liefert also das Energiemaß, das dann dazu verwendet wird, um einen Wert auf der ausgewählten Parameterkurve zu ermitteln. Vorzugsweise findet der Zugriff auf eine Tabelle mit einer Kurvenschar in einem Schritt 103 derart statt, dass eine dreidimensionale Tabelle gegeben ist, die Dreiergruppen von Werten aufweist, wobei ein erster Wert der Dreiergruppe der Ruhedruck·p₀ ist, ein zweiter Wert der Dreiergruppe die integrierte Druckänderung ist, und ein dritter Wert dann die Schusskraft ist, wie sie an der y-Achse von Fig. 8 aufgetragen ist. Diese Schusskraftinformation wird durch den Schritt 103 geliefert. Wenn Fig. 9 und Fig. 10 verglichen werden, so ist ersichtlich, dass die Schritte 100 und 101 durch die Einrichtung 90 ausgeführt werden, dass der Schritt 102 durch die Einrichtung 92 ausgeführt wird, und dass der Schritt 103 durch die Einrichtung 94 ausgeführt wird.

Je nach Implementierung des erfindungsgemäßen Systems, also je nach geforderter Vielseitigkeit kann auch im Schritt 103 noch eine Information über den Spielgerätetyp berücksichtigt werden, der bei 104 eingespeist wird. So kann die Schusskraft davon abhängen, ob es sich bei dem Ball um einen Tennisball oder um einen Fußball handelt. Außerdem wird die Schusskraft von Fabrikat zu Fabrikat variieren. Dies ist besonders dann relevant, wenn als Schusskraft die "ideale Reichweite" des Balls genommen wird, die dann auch von der Balloberfläche abhängt. Eine glattere Oberfläche des Balls hat einen geringren Luftwiderstand, so dass bei gleicher übertragener Energie die Schusskraft - gemessen in Metern - größer sein wird als von einem Ball mit einer raueren Oberfläche. Dennoch hängen beide Schusskraftergebnisse von der in den Ball überbrachten Energie ab, und zusätzlich noch von dem über die Leitung 104 zugeführten Spielgerätetyp.

Je nach Implementierung werden alle oder nur ein Teil der in Fig. 9 gezeigten Komponenten im Spielgerät selbst sein oder in einer zentralen Vorrichtung, die entfernt von dem Spielgerät angeordnet ist.

Bei dem ersten Ausführungsbeispiel eines solchen Systems wird in dem Spielgerät selbst nur ein Beschleunigungssensor oder ein Drucksensor sein, welche ausgebildet sind, um einen zeitlichen Verlauf von Beschleunigung oder Druck zu speichern. Dieser zeitliche Verlauf von Beschleunigung oder Druck kann dann z. B. über einen Funksender zu einem Empfänger übertragen werden, der beispielsweise in Form einer Armbanduhr beim Spieler vorhanden sein könnte. Alternativ muss der Ball nicht unbedingt einen Funksensor haben, sondern kann eine Ausgabeschnittstelle haben, die dann, wenn der Ball in eine speziell ausgebildete Docking-Station gelegt wird, die gespeicherten Verläufe von Bescheunigung oder Druck ausliest. Dann würde die Verarbeitung im Block 92 und die Schusskraftinformationslieferung im Block 94 in einer externen Station, wie beispielsweise der Uhr des Spielers oder einer zentralen Empfangsstation auf einem Fußballfeld etc. stattfinden.

Alternativ kann sowohl die Funktionalität der Einrichtung 90 als auch der Einrichtung 92 im Ball integriert sein und der Ball liefert bereits das Energiemaß zu einer externen Empfangsstation. Dies hat zur Folge, dass weniger Daten vom Ball nach außen übertragen werden müssen, dass jedoch mehr Prozessor-Leistung innerhalb des Spielgeräts benötigt wird.

Alternativ können auch alle Einrichtungen 90, 92, 94 im mobilen Spielgerät implementiert sein, so dass nur die Information über die Schusskraft von dem Ball sogar direkt angezeigt wird oder aber über eine Ausgabeschnittstelle, die beispielsweise eine Funkschnittstelle oder eine Kontaktschnittstelle sein kann, ausgegeben wird.

Das in Fig. 9 gezeigte System umfasst auch die Funktionalität der externen Empfangsschnittstelle 6, wenn im Ball nur ein Sensor vorhanden ist und der Ball den zeitlichen Verlauf von Beschleunigung oder Innendruck ausgibt. Dann ist die Einrichtung 90 zum Liefern eines zeitlichen Verlaufs von Beschleunigung oder Innendruck von Fig. 9 eine Eingangsschnittstelle des externen Rechners, der zusätzlich noch die Einrichtung 92 und die Einrichtung 94 umfasst.

So kann also die erfindungsgemäße Vorrichtung zum Messen der Schusskraft komplett innerhalb des mobilen Spielgeräts oder komplett außerhalb des mobilen Spielgeräts oder teilweise innerhalb des mobilen Spielgeräts und teilweise außerhalb des mobilen Spielgeräts angeordnet und implementiert sein.

Insofern umfasst die Vorrichtung zum Messen einer auf einem beweglichen Spielgerät ausgeübten Schusskraft bei einer teilweisen Implementierung sowohl das Spielgerät als auch die Auswertungsvorrichtung oder nur das Spielgerät oder nur die Auswertungsvorrichtung.

Die Erfindung schafft also die Erfassung der Schusskraft und der daraus bestimmbaren Fluggeschwindigkeit eines Spielgeräts 7. So steht beim Fußballspiel häufig die Frage im Raum, wer den "härtesten" Schuss hat. Insbesondere für diese Ausführungsform, aber auch für die anderen Ausführungsformen besteht die Möglichkeit, die Auswerteeinheit 13 auch in der Baugruppe 15 im Spielgerät 7 zu integrieren. Im Spielgerät 7 kann ein Sensor angebracht werden, der die Schusskraft misst. Dieser Sensor ist vorzugsweise ein Drucksensor 10 oder ein Beschleunigungssensor. Die Informationen dieses Sensors werden von einem internen Mikrocontroller gemessen und zum Beispiel an die Anzeigeeinheit 14 am Datenerfassungsgerät 12 des Spielers übertragen. Für die Bestimmung der Schusskraft ist die Messung der Energie erforderlich, die der Ball beim Schuss erhalten hat. Die Auswerteeinheit 13 weist dazu zum Beispiel Mittel zur Erfassung des vom Drucksensor 10 ermittelten Drucks über die Zeit oder der vom Beschleunigungssensor erfassten Beschleunigung auf. Ferner sind Rechenmittel zur Berechnung der auf den Ball 7 vom Spieler 6 aufgebrachten Kraft anhand des Druckverlaufs oder Beschleunigungsverlaufs vorgesehen.

Beim Beschleunigungssensor wird die Beschleunigung direkt gemessen und an den Mikrocontroller im Spielgerät 7 gemeldet. Dieser berechnet aus der bekannten Masse des Balls und der gemessenen Beschleunigung die Kraft, die auf den Ball eingewirkt hat. In diese Berechnungen gehen auch die Aerodynamik und der zeitliche Verlauf der dem Ball zugeführten Energie ein. Bei der Berechnung wird nicht nur die Gesamtenergie an die Auswerteeinheit 13 übertragen, sondern auch der zeitliche Verlauf der Energieübertragung auf den Ball.

Bei der alternativen Verwendung eines Drucksensors 10 wird gemessen, wie sich der Ballinnendruck beim Schuss erhöht. Diese Druckänderungen und der zugehörige zeitliche Verlauf ermöglicht es dem Mikrocontroller im Ball die Kraft zu bestimmen, die auf den Ball eingewirkt hat. Mit Hilfe der Druckmessung kann festgestellt werden, wie stark der Ball verformt wurde. Je größer die Verformung, desto höher die Schusskraft. Hierzu wird der Spitzenwert und der Druckverlauf des Innendrucks mit Hilfe des Drucksensors 10 gemessen. Anhand einer Kurvenschar wird die Energie bestimmt, die dem Ball zugeführt wurde. Die Kurvenschar kann zum Beispiel zuvor empirisch mittels einer Schussanlage ermittelt werden und ist für jeden Ball-Typ verschieden.

Aus der übertragenen Energie und dem zeitlichen Verlauf kann dann die Schusskraft sehr genau ermittelt werden. Zur Anzeige kann neben der Schusskraft auch die Gesamtenergie gebracht werden. Dies ermöglicht es, Informationen über die Schussart zu gewinnen. So kann der Ball bei einer gleichmäßigen Energiezufuhr viel präziser gespielt werden. Wenn also die Dauer der Energiezufuhr ergänzend angezeigt wird, wozu zusätzliche Erfassungsmittel vorgesehen sein können, kann dies auch trainiert werden.

Anhand der Energie kann auch auf die Fluggeschwindigkeit geschlossen werden, die der Ball erhalten hat. Hierzu werden Gewicht und Aerodynamik des Balls berücksichtigt. Die ermittelte Fluggeschwindigkeit ist der Wert, der erreicht wird, wenn der Ball nach dem Schuss frei wegfliegen kann. Zusätzlich zur Krafteinwirkung kann mit Hilfe des Drucksensors 10 und/oder des Beschleunigungssensors auch der Zeitpunkt des Abstoßes und der Zeitpunkt der Landung des Balls ermittelt werden. Durch die Kraftinformationen und die Zeitdauer des Fluges kann recht gut berechnet werden, wie weit der Ball geflogen sein muss.

Ergänzend können Komponenten wie wenigstens ein Hall-Sensor 16, wenigstens zwei magnetoresistive Sensoren oder wenigstens zwei Spulen vorgesehen sein, um die Rotationsgeschwindigkeit des Spielgeräts 7 zu bestimmen. Diese Information kann zum Trainieren von sogenannten "Bananenflanken" im Fußball verwendet werden. Hierzu ist es wichtig, dass der Anwender sofort eine Rückmeldung über seinen Schuss bekommt. Dazu wird die Rotationsgeschwindigkeit im Ball gemessen und per Funk 1 auf das Datenerfassungsgerät 12 des Spielers 6 übertragen. Die Komponenten sind dabei so angeordnet, dass sich bei deren Bewegung bei Rotation des Spielgeräts 7 in einem Energiefeld eine von der Auswerteeinheit 13 bestimmbare Modulationsfrequenz ergibt, die in die Rotationsgeschwindigkeit umgerechnet werden kann.

Der Sensor, zum Beispiel der Hall-Sensor 16, misst zum Beispiel das Erdmagnetfeld und bestimmt die Feldstärke. Rotiert der Ball, so erfährt die Feldstärke eine Modulation. Die Frequenz der Modulation ist direkt proportional zur Rotationsgeschwindigkeit des Balls. Bei der Messung des Erdmagnetfelds wird der Richtungsvektor des Magnetfelds bestimmt. Die Rotation dieses Vektors ist proportional zur Ballrotation. Alternativ kann die Feldstärke mit magnetoresistiven Sensoren als Magnetfeld abhängigen Widerständen gemessen werden. Diese können zu einer Brücke geschaltet werden. Das Ausgangssignal der Brücke kann mit einem Differenz-Verstärker verstärkt werden. Die Ausgangsspannung ist ein direktes Maß für die Feldstärke des Magnetfeld. Für die Zwecke der Rotationsmessung ist weder eine Linearität der Spannung noch eine Richtungsbestimmung des Feldes notwendig. Rotiert der Ball, so ist der Ausgangsspannung eine Wechselspannung überlagert, deren Frequenz die Rotationsfrequenz des Balles ist. Die Frequenz dieser Wechselspannung ist die Rotationsfrequenz des Balls. Die Auswertung dieser Spannung kann entweder diskret über eine analoge Schaltung oder mit Hilfe eines Mikrocontrollers erfolgen. Um bei jeder möglichen Rotationsachse des Balls ein auswertbares Signal zu erhalten, werden zwei 90 Grad versetzte Sensoren verwendet.

Die Feldstärke kann auch mit dem Hall-Sensor 16 gemessen werden. Hall-Sensoren erzeugen proportional zur Feldstärke eine Spannung. Diese Spannung kann mit Hilfe eines Differenz-Verstärkers verstärkt werden. Die Ausgangsspannung ist ein direktes Maß für die Feldstärke des Magnetfeldes. Für die Zwecke der Rotationsmessung ist weder eine Linearität der Spannung noch eine Richtungsbestimmung des Feldes notwendig. Rotiert der Ball, so ist der Ausgangsspannung eine Wechselspannung überlagert, deren Frequenz die Rotationsfrequenz des Balles ist. Auch hier sind vorzugsweise zwei Sensoren um 90 Grad versetzt zueinander angeordnet.
Alternativ können auch Spulen in einem Magnetfeld in Rotation versetzt werden, so dass in den Spulen eine Spannung induziert wird. Die Frequenz der Spannung ist der Rotationsfrequenz proportional. Die Spannung muss allerdings verstärkt und gefiltert werden, da die Spulen auch als Antennen wirken können. Auch hier ist eine diskrete oder eine Auswertung über den Mikrocontroller möglich und vorzugsweise werden zwei Spulen 90 Grad versetzt zueinander angeordnet.

Um die Rotationsgeschwindigkeit zu bestimmen, können auch Funksender verwendet werden. Dabei wird die Feldstärkeänderung irgendeines Funksenders zum Beispiel eines Mittelwellensenders verwendet. Die Frequenz der Feldstärkeänderung ist proportional der Rotationsfrequenz. Als Antenne kann neben einem Dipol eine Spule oder eine Ferrit-Antenne verwendet werden. Da in jedem Land genügend aktive Lang-, Mittel- und Kurzwellensender vorhanden sind, braucht man in dem System keine eigenen Sender zu betreiben. Sollen Sender mit relativ hoher Frequenz als Referenz verwendet werden, kommt eine Dipol-Antenne in Betracht, die zum Beispiel in Form von Leiterbahnen auf die Ballelektronik oder auch auf die Hülle des Balls aufgebracht werden kann. Eine Rahmen-Antenne ist für niedrige Frequenzen geeignet. Diese kann als Spule in Form von Leiterbahnen für die Baugruppe 15 der Ball-Elektronik aufgebracht werden. Eine Ferrit-Antenne ist für niedrige Frequenzen geeignet. Diese kann sehr klein aufgebaut werden und erzeugt dennoch ein relativ großes Ausgangssignal. Bei allen Antennen ist es notwendig, dass zwei Empfangsrichtungen aufgebaut werden, damit bei jeder beliebigen Rotationsachse ein Signal gemessen werden kann. Bei der Signalmessung kommt es nur auf die Feldstärke an. Hierzu wird ein Verstärker mit einer großen Dynamik notwendig. Die Verstärkung sollte zum Beispiel logarithmisch sein, damit der A/D Wandler des Mikrocontrollers nicht zu breit sein muss.

Die Daten und die Steuerung der Ball-Elektronik übernimmt ein extrem stromsparender Mikrocontroller. Dieser wird beim Beginn des Spiels geweckt. Stellt der Mikrocontroller über längere Zeit kein Spiel mehr fest, schaltet er sich automatisch ab. Die Hauptaufgabe des Mikrocontrollers 11, der auch oder zusätzlich zu dem Mikrocontroller 11 im Datenerfassungsgerät im Spielgerät integriert sein kann, ist es die Daten so aufzubereiten, dass diese mit möglichst wenig Energie per Funk 1 übertragen werden können. Die Daten werden per Funk z.B. über eine 2,4 GHz Funkstrecke vorzugsweise mehrfach gesendet, um Fehler korrigieren zu können.

Die Stromversorgung kann in bekannter Weise auf zwei Arten realisiert werden. Zum einen kann ein Akku verwendet werden, der allerdings eine Ladevorrichtung benötigt. Zum anderen kann eine Primärbatterie 21 im Datenerfassungsgerät und eine Primärbatterie 22 im Spielgerät 7 verwendet werden, wobei diese im Ball allerdings nicht ausgewechselt werden kann.

In der Akku-Version wird im Ball eine Ladespule angebracht mit deren Hilfe induktiv der Akku geladen werden kann. Bei der Version mit Batterie 22 wird der Ball über Lithium-Batterien versorgt. Die Kapazität ist so ausgelegt, dass über 1000 Stunden die Funktion der Elektronik sichergestellt ist. Bei einer durchschnittlichen Spieldauer von 1 Stunde am Tag würde die Batterie 3 Jahre halten.

Im Datenerfassungsgerät 12 ist als Empfangseinheit 2 ein Transceiver integriert. Dieser empfängt die Daten aus dem Ball bzw. kann eine Verbindung zu anderen Datenerfassungsgeräten aufbauen, um Daten auszutauschen. Das Senden und Empfangen der Daten findet z.B. im 2,4 GHz Band statt.

Der Transceiver kann Daten empfangen und senden. Damit ist es möglich, die Datenerfassungsgeräte untereinander zu koppeln. Dadurch können während des Spiels die Ballkontakte auf die anderen Datenerfassungsgeräte übertragen werden, so dass im Netzwerk eine sehr genaue statistische Datenmenge entsteht, um das Spiel beurteilen zu können. Durch die Datenübertragung ist es bedarfsweise auch möglich, kleine Computerspiele zu ermöglichen, in denen die Anwender vernetzt spielen können.

Die Daten im Datenerfassungsgerät 12 werden mit Hilfe eines relativ großen Mikrocontrollers 11 aufbereitet. Dieser Mikrocontroller ist extrem stromsparend. Die Daten werden über den Transceiver ausgetauscht und auf einer Anzeigeeinheit 14 visualisiert.

Die aufbereiteten Daten werden mit Hilfe eines grafischen Displays angezeigt. Das Display hat einen integrierten Controller, an dem der Mikrocontroller angeschlossen ist. Die Bedienung erfolgt über mehrere Tasten 20, deren Funktion dynamisch ist.

Die Stromversorgung des Datenerfassungsgeräts 12 muss sehr stromsparend aufgebaut sein. Die Batterie 21 kann ausgewechselt werden. Der Mikrocontroller 11 und das Display sind extrem stromsparend. Die Datenübertragung wird so gestaltet, dass der Transceiver immer nur sehr kurzzeitig in Betrieb ist.

Bei der Ball-Version mit Akku ist eine Ladestation notwendig. Da es keine leitungsgebundene Verbindung zur Ball-Elektronik gibt, ist es notwendig, den Ball in bekannter Weise induktiv zu laden. Hierzu hat die Ladestation eine Sendespule, mit deren Hilfe die Energie in den Ball übertragen wird.

Um mit anderen Auswerteeinheiten kommunizieren zu können, ist eine Umsetzung der Funkverbindung in ein anderes Protokoll notwendig. Da hier zu 99% ein üblicher PC in Frage kommt, ist eine Umsetzung z.B. nach USB vorgesehen.

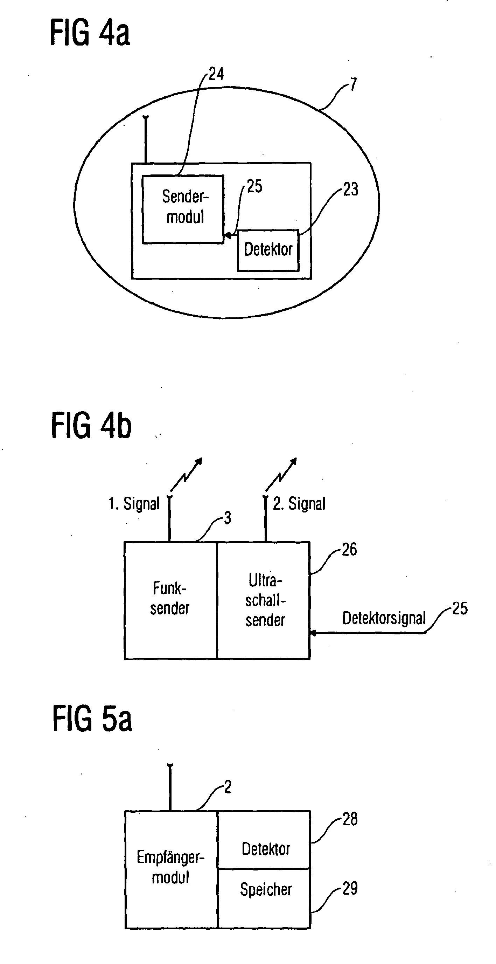

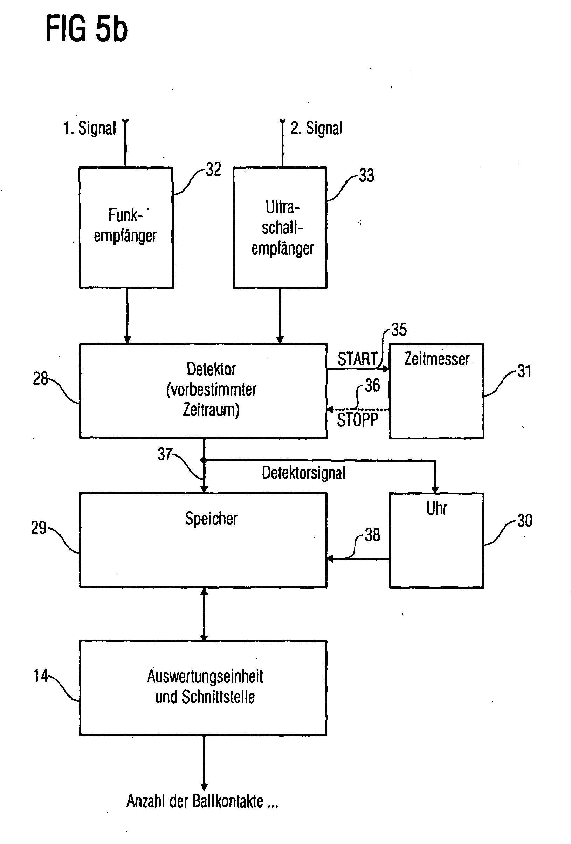

Nachfolgend wird noch einmal näher auf die miteinander zusammenwirkenden Komponenten des bevorzugten Konzepts, nämlich der beweglichen Vorrichtung anhand von Fig. 4a und Fig. 4b und der Empfängervorrichtung anhand von Fig. 5a und Fig. 5b näher eingegangen. Die bewegliche Vorrichtung 7 enthält einen Detektor 23, der z.B. der Drucksensor 10 von Fig. 3 sein kann, welcher erfasst, wenn der Ball 7 berührt wird. Der Detektor 23 kann jedoch einen berührungslosen Sensor umfassen, der auf elektrische, akustische, optische oder elektromagnetische Art und Weise arbeitet und z.B. erfasst, ob sich dem Ball ein irgendwie geartetes magnetisches oder elektrisches Feld nähert, das z.B. von einem entsprechenden Sender in dem Schuh eines Fußballspielers erzeugt wird. Der Detektor 23 ist ausgebildet, um zu erfassen, dass sich ein Objekt, also z.B. ein Bein, ein Fuß, ein Schuh, ein Schläger oder etwas ähnliches in der Nähe oder an dem Spielgerät befindet.

Ferner umfasst die bewegliche Vorrichtung 7 ein Sendermodul 24, das ausgebildet ist, um ein erstes Signal, das eine erste Signalgeschwindigkeit aufweist, zu senden, und um ferner ein zweites Signal, das eine zweite Signalgeschwindigkeit hat, die kleiner als die erste Signalgeschwindigkeit ist, zu senden. Das Sendermodul ist ausgebildet, um ansprechend auf ein Detektorausgangssignal das erste und das zweite Signal auszusenden, wie es durch den Signalpfeil 25 in Fig. 4a gezeigt ist.

Wie es bereits ausgeführt worden ist, ist der Detektor 23 ein Berührungssensor, der ausgebildet ist, um eine Berührung der beweglichen Vorrichtung durch das Objekt zu erfassen. Ein solcher Berührungssensor ist z.B. der Drucksensor, ist allerdings auch ein Beschleunigungssensor, oder irgendein anderer Sensor, der erfasst, ob das Objekt die Oberfläche des Spielgeräts 7 in Eingriff nimmt. Alternativ kann der Detektor auch als berührungsloser Sensor ausgebildet sein, welcher, wie es ausgeführt worden ist, auf irgendeine Art und Weise erfasst, dass sich ein Objekt in der Nähe der beweglichen Vorrichtung befindet. Für bestimmte Ausführungsformen ist ein berührungsloser Sensor geeignet, der erfasst, ob sich ein Objekt in einem vorbestimmten Abstand, der gleich oder kleiner als 10 cm ist, von der beweglichen Vorrichtung entfernt befindet. Dann kann mit hoher Wahrscheinlichkeit davon ausgegangen werden, dass das Objekt die bewegliche Vorrichtung auch berührt, da es nur das Ziel ist, das Objekt in Berührung mit der beweglichen Vorrichtung zu bringen, wenn beispielsweise an einen Fußball als bewegliche Vorrichtung oder einen Tennisball gedacht wird. Hier kann man nahezu sicher davon ausgehen, dass, wenn sich das Objekt einmal innerhalb des vorbestimmten Abstands befindet, das Objekt schließlich auch einen Kontakt mit der beweglichen Vorrichtung haben wird.

Das Sendermodul ist ausgebildet, um zwei Signale unterschiedlicher Signalgeschwindigkeiten zu senden. Vorzugsweise wird als erstes schnelles Signal ein Funksignal verwendet, das von dem Funksender 3 erzeugt wird. Das zweite Signal wird von einem Schallsender 26 erzeugt, welcher vorzugsweise als Ultraschallsender ausgebildet ist. Beide Sender werden von dem Detektorsignal, das über die Leitung 25 zugeführt wird, gesteuert, um ansprechend auf das Detektorsignal zeitgleich oder im Wesentlichen zeitgleich also innerhalb eines Zeitraums von z.B. 1 bis 2 ms beide Signale abzusenden. Alternativ können die Sender jedoch ausgebildet sein, so dass die Funksender das erste Signal zu einem bestimmten Zeitpunkt, der durch das Detektorsignal 25 bestimmt wird, sendet, und dass der Ultraschallsender dann noch eine vorbestimmte Zeitdauer wartet, bevor das Ultraschallsignal ausgesendet wird. Hierbei würde dann auf Empfängerseite der Empfang des Funksenders auch nicht unmittelbar zur Aktivierung eines Zeitmessers führen, sondern der Zeitmesser würde in einer vordefinierten Zeitdauer nach Empfang des ersten Signals aktiviert werden, also nicht unmittelbar bei Empfang des ersten Signals aber abhängig von dem Empfang des ersten Signals.

Alternativ könnte die Ballkontakterfassung auch dazu verwendet werden, um zunächst das Ultraschallsignal abzusenden, um dann nach einer bestimmten Zeitdauer das Funksignal auszusenden, das dann das Ultraschallsignal gewissermaßen überholt, so dass auf Empfängerseite eine sehr kurze vorbestimmte Zeitdauer ausreicht, innerhalb derer das Funksignal und das Ultraschallsignal ankommen. Allerdings wird es bevorzugt, dass beide Sender zeitgleich ihre Signale aussenden und dass eine entsprechend längere vorbestimmte Zeitdauer auf Empfängerseite eingesetzt wird bzw. dass auf Empfängerseite unmittelbar bei Empfang des Funksenders der Zeitmesser gestartet wird.

Die vorbestimmte Zeitdauer hängt von der Differenz der Geschwindigkeiten des schnellen ersten Signals und des langsamen zweiten Signals ab. Je kleiner diese Geschwindigkeitsdifferenz ist, umso kleiner kann auch die vorbestimmte Zeitdauer gewählt werden. Je größer die Geschwindigkeitsdifferenz ist, umso größer muss die vorbestimmte Zeitdauer eingestellt werden. Ferner hängt die vorbestimmte Zeitdauer davon ab, ob das erste und das zweite Signal wirklich zeitgleich abgesendet werden oder ob das erste und das zweite Signal zeitversetzt abgesendet werden, wobei eine Verzögerung des zweiten Signals bezüglich des ersten Signals zu einer Verzögerung des Starts der vorbestimmten Zeitdauer führt, während eine Verzögerung des ersten Signals gegenüber dem zweiten Signal zu einer kleineren vorbestimmten Zeitdauer führt. Generell werden jedoch vorbestimmte Zeitdauern kleiner als 5 ms bevorzugt, wie es bereits ausgeführt worden ist.

Auf Empfängerseite steht, wie es in Fig. 5b gezeigt ist, das Empfängermodul mit einem Detektor 28 in Verbindung, der mit einem Speicher 29 gekoppelt sein kann, oder der mit einem weiteren Funksender innerhalb der Empfängervorrichtung gekoppelt sein kann, was jedoch in Fig. 5a nicht gezeigt ist. Detektor und Speicher 29 sind vorzugsweise in der Auswerteeinheit 13 von Fig. 3 enthalten. Die insgesamt in Fig. 3 unten gezeigte Empfängervorrichtung bzw. die in Fig. 5a gezeigte Empfängervorrichtung ist vorzugsweise so ausgebildet, dass sie in einer Armbanduhr integriert ist bzw. Form und Aussehen einer Armbanduhr hat, so dass sie von einem Fußballspieler beispielsweise oder von einem Tennisspieler gut getragen werden kann, ohne dass dieser in der Ausübung seines Sports beeinträchtigt wird. Allgemein gesagt wird die Empfängervorrichtung an dem Objekt, dessen Nähe zur beweglichen Vorrichtung von dem Detektor 23 von Fig. 4a erfasst wird, anbringbar und hat eine entsprechende Anbringvorrichtung, die in Fig. 5a nicht gezeigt ist, die jedoch z.B. die Form eines Uhrenarmbands, einer Halterung für ein Armbad, eines Clipses oder eine andere Befestigungsvorrichtung hat, die in irgendeiner Art und Weise an dem Objekt bzw. an einem Spieler angebracht werden kann.

Das Empfängermodul 2 ist ausgebildet, um das erste Signal mit der ersten Signalgeschwindigkeit und das zweite Signal mit der zweiten Signalgeschwindigkeit, die kleiner als die erste Signalgeschwindigkeit ist, zu empfangen. Ferner ist der Detektor 28 ausgebildet, um ein Detektorsignal zu liefern, das anzeigt, ob innerhalb eines vorbestimmten Zeitraums seit einem Empfang eines ersten Signals das zweite Signal empfangen worden ist. Ferner ist der Detektor vorzugsweise mit dem Speicher 29 gekoppelt, der ausgebildet ist, um zu speichern, wenn der Detektor das Detektorsignal liefert. Alternativ kann statt des Speichers auch ein weiterer Sender vorhanden sein, der ausgebildet ist, um das Detektorsignal zu einer zentralen Erfassungsstelle zu senden, in der dann z.B. eine Online-Auswertung von Ballkontakten für die einzelnen Spieler stattfindet.

Eine solche Online-Erfassungsstelle wäre beispielsweise ein Empfänger, der an irgendeiner Stelle in der Nähe eines Fußballfeldes angeordnet ist. In diesem Fall würde jede Empfängervorrichtung ausgangsseitig einen Kontakt mit der beweglichen Vorrichtung zusammen mit einer Identifikation für den Spieler, der die Empfängervorrichtung trägt, aussenden, so dass unbestreitbare statistische Daten erhoben werden können, welcher Spieler wie viel Ballkontakte hatte.

So stellt sich in letzter Zeit heraus, dass solche Informationen über Ballkontakte etc. immer mehr bei Fußballspielen beispielsweise erfasst, gezeigt und einem breiten Publikum bzw. dem Kommentator bereitgestellt werden, um den Informationsgehalt für die Zuschauer zu erhöhen.

Bei der Implementierung mit dem Speicher 29 ist beispielsweise keine zentrale Empfängervorrichtung auf dem Fußballfeld nötig. Stattdessen kann der Speicher dann z.B. in der Halbzeitpause oder am Ende des Spiels oder berührungslos während des Spiels ohne Spielerinteraktion ausgewertet werden, um entweder für jeden Spieler einen Zählwert zu erhalten, der angibt, wie oft der Spieler einen Kontakt mit der beweglichen Vorrichtung hatte. In diesem Fall wäre der Speicher 29 als Zähler implementiert, der bei jeder Erfassung des Detektorsignals um 1 inkrementiert wird. Alternativ oder zusätzlich kann der Speicher auch eine absolute Zeit einer in der Empfängervorrichtung vorzugsweise enthaltenen Uhr erfassen, die in Fig. 5b bei 30 gezeichnet ist. Dann würde der Speicher eine Folge von Zeitpunkten speichern, die dann ausgewertet werden können, um für jeden Spieler ein "Ballkontaktprofil" über der Zeit aufstellen zu können. Hierbei können nachträglich auch möglicherweise noch stattgefundene Fehlerfassungen korrigiert werden, wenn z.B. herausgefunden werden würde, dass mehr als zwei Spieler gleichzeitig Kontakt mit dem Ball hatten. So ist ein Kontakt von zwei Spielern gleichzeitig noch relativ wahrscheinlich, wenn z.B. an einen "Pressschlag" gedacht wird. Sehr unwahrscheinlich wird jedoch beim Fußball beispielsweise ein Kontakt von 3 Spielern mit dem Ball zum gleichen Zeitpunkt. Beim Tennis beispielsweise ist jedoch bereits ein Kontakt von zwei Tennisschlägern zum gleichen Zeitpunkt ausgeschlossen, so dass hierbei zusätzliche Informationen über typische Situationen in einer Sportart mit dem bewegliche Spielgerät noch verwendet werden können, um eine Auswertung durchzuführen, in der dann noch Fehler eliminiert werden können.

Fig. 5b zeigt eine speziellere Ausführungsform des in Fig. 5a gezeigten Empfängers. Das Empfängermodul umfasst einerseits einen Funkempfänger 32 zum Empfangen des ersten schnellen Signals und einen Ultraschallempfänger 32 zum Empfangen des zweiten langsameren Signals. Funkempfänger und Ultraschallempfänger können auch anders ausgeführt werden, solange sie irgendwelche Signale empfangen, die unterschiedliche Signalgeschwindigkeiten haben. Ein Detektor 28 aktiviert in Abhängigkeit eines empfangenen Funksignals einen Zeitmesser 31 über eine Start-Leitung 35. Nach Verstreichen einer vorbestimmten Zeitdauer bzw. des vorbestimmten Zeitraums wird der Zeitmesser gestoppt, was typischerweise so erfolgen wird, dass der Zeitmesser 31, der auf den vorbestimmten Zeitraum eingestellt ist, ein Stopp-Signal über eine Stopp-Leitung 36 an den Detektor liefert.

Erfasst der Detektor nach Erhalt des Stopp-Signals ein Ultraschallsignal, so wird kein Detektorsignal an einer Leitung 37 ausgegeben. In diesem Fall wird nämlich davon ausgegangen, dass die Empfängervorrichtung soweit von der beweglichen Vorrichtung entfernt ist, dass mit hoher Wahrscheinlichkeit gesagt werden kann, dass die bewegliche Vorrichtung nicht getroffen worden ist. Wird jedoch vom Detektor vor Erhalt des Stopp-Signals, also vor Verstreichen des vorbestimmten Zeitraums ein Ultraschallsignal empfangen, so wird das Detektorsignal 37 ausgegeben, das dann vom Speicher abgespeichert wird, wobei der Speicher beispielsweise ein Zähler ist, der durch das Detektorsignal um 1 inkrementiert wird.

Alternativ wird das Detektorsignal einer Uhr zugeführt, die eine absolute Zeitmessung durchführt, die z.B. eine tatsächliche absolute Tageszeit sein kann, die jedoch z.B. auch eine absolute Zeit ist, die z.B. bei Beginn des Spiels anfängt zu laufen und damit unmittelbar nicht eine absolute Zeit, sondern eine Spielminute eines z.B. Fußballspiels wiedergibt. Zum Zeitpunkt des Detektorsignals liefert die Uhr 30 dann über eine Datenleitung 38 dem Speicher 29 ihren aktuellen Stand, so dass der Speicher dann diesen Zeitpunkt abspeichern kann. Über eine Auswertungseinheit mit Schnittstelle, wie sie beispielsweise durch die Anzeigeeinheit 14 in Fig. 3 oder in Fig. 5b implementierbar ist, welche insbesondere mit dem Mikrocontroller 11 von Fig. 3 kooperiert, kann eine beliebige Auswertung der Spieleraktivität durchgeführt werden.

Abhängig von den Gegebenheiten können die erfindungsgemäßen Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, ist die vorliegende Erfindung somit auch ein Computerprogramm mit einem Programmcode zur Durchführung des Verfahrens zum Umsetzen, wenn das Computerprogramm auf einem Computer abläuft.

## Patentansprüche

1. Vorrichtung zum Messen einer auf ein bewegliches Spielgerät ausgeübten Schusskraft, mit folgenden Merkmalen:
eine Einrichtung (90) zum Liefern eines bei einer Einwirkung auf das Spielgerät durch einen Gegenstand auftretenden zeitlichen Verlaufs eines Innendrucks des Spielgeräts;
einer Einrichtung (92) zum Verarbeiten des zeitlichen Verlaufs des Innendrucks, um ein Energiemaß zu erhalten, das von einer durch den Schuss auf den Gegenstand übertragenen Energie abhängt, wobei die Einrichtung zum Verarbeiten (92) ausgebildet ist, um Informationen über einen Ruhe-Innendruck vor oder nach dem Schuss zu liefern, und um eine Druckänderung des Innendrucks über dem Ruhe-Innendruck zu integrieren, um das Energiemaß zu erhalten;
einer Einrichtung (94) zum Liefern einer Information über die Schusskraft, basierend auf dem Energiemaß, mit einem Speicher, in dem für verschiedene Drücke Informationen über vorher bestimmte Kurven gespeichert sind, wobei eine Kurve einen Zusammenhang zwischen einer Schusskraft und einem Energiemaß umfasst, wobei die Einrichtung (94) zum Liefern ausgebildet ist, um basierend auf dem Ruhe-Innendruck eine Kurve zu wählen und basierend auf dem Energiemaß eine Schusskraft, die durch die ausgewählte Kurve angezeigt wird, zu liefern.

2. Vorrichtung nach Anspruch 1, bei der die Einrichtung (90) zum Liefern einen an einem Spielgerät angebrachten Drucksensor oder einen Empfänger aufweist, der ausgebildet, ist, um von dem beweglichen Spielgerät stammende zeitliche Verläufe oder ein Energiemaß zu erhalten.

3. Vorrichtung nach Anspruch 1 oder Anspruch 2, bei dem die Einrichtung (92) zum Verarbeiten ausgebildet ist, um den zeitlichen Verlauf zeitlich zu integrieren, wobei ein Ergebnis einer Integration das Energiemaß darstellt.

4. Vorrichtung nach einem der vorhergehenden Ansprüche, bei der die Einrichtung (92) zum Verarbeiten ausgebildet ist, um den zeitlichen Verlauf nach einem Maximum, einem Minimum, einer Form, einer zeitlichen Dauer einer Abweichung von einem Normalwert in einem Ruhezustand zu untersuchen, um das Energiemaß zu verhalten.

5. Vorrichtung, nach einem der vorhergehenden Ansprüche, bei der die Schusskraft einen Wert auf einer Schusskraftskala ist, und bei der die Einrichtung (94) zum Liefern ausgebildet ist, und einen Wert des Energiemaßes auf einen Wert der Schusskraftskala gemäß einer vorbestimmten Abbildungsvorschrift abzubilden.

6. Vorrichtung nach einem der Ansprüche 1 bis 4, bei der die Schusskraft abhängig von einer Wegstrecke ist, die das bewegliche Spielgerät fliegen würde, wenn es in einem bestimmten Schusswinkel getroffen wird, und
bei der die Einrichtung (94) zum Liefern ausgebildet ist, um basierend auf dem Energiemaß, einem Spielgerätgewicht und einer Spielgerät-Reibung in der Luft die Wegstrecke zu berechnen.

7. Vorrichtung nach Anspruch 1,
bei der in dem Speicher eine dreidimensionale Tabelle gespeichert ist, in der zu verschiedenen Paaren von Innendruck und Energiemaß eine Schusskraft zugeordnet ist, und
bei der die Einrichtung (94) zum Liefern ausgebildet ist, um abhängig von dem Innendruck und dem Energiemaß auf die Tabelle zuzugreifen, um die Schusskraft zu ermitteln.

8. Vorrichtung nach einem der vorhergehenden Ansprüche,
bei der das bewegliche Spielgerät ein Ball ist.

9. Vorrichtung nach Anspruch 1, bei der die Einrichtung (94) zum Liefern Informationen über verschiedene Kurvenscharen für verschiedene Type von Spielgeräten (104) aufweist, und bei der die Einrichtung (94) zum Liefern ausgebildet ist, um neben dem Innendruck und dem Energiemaß auch einen Typ des Spielgeräts auf der Basis einer eingegeben Spielgerätetypinformation zu identifizieren.

10. Vorrichtung nach Anspruch 9, bei der die Einrichtung (94) zum Liefern einer Information über die Schusskraft ausgebildet ist, um eine Spielgerätetypinformation über ein Funksignal von dem Spielgerät zu erhalten.

11. Bewegliches Spielgerät mit folgenden Merkmalen:
einer Vorrichtung zum Messen einer auf das bewegliche Spielgerät ausgeübten Schusskraft, gemäß einem der Ansprüche 1 bis 10;

12. Verfahren zum Messen einer auf ein bewegliches Spielgerät ausgeübten Schusskraft, mit folgenden Schritten:
Liefern (90) eines bei einer Einwirkung auf das Spielgerät durch einen Gegenstand auftretenden zeitlichen Verlaufs eines Innendrucks des Spielgeräts;
Verarbeiten (92) des zeitlichen Verlaufs des Innendrucks, um ein Energiemaß zu erhalten, das von einer durch den Schuss auf den Gegenstand übertragenen E-Energie abhängt, wobei der Schritt des Verarbeitens das Liefern von Informationen über einen Ruhe-Innendruck vor oder nach dem Schuss, und das Integrieren einer Druckänderung des Innendrucks über dem Ruhe-Innendruck, um das Energiemaß zu erhalten, aufweist;
Liefern (94) einer Information über die Schusskraft basierend auf dem Energiemaß unter Verwendung eines Speichers, in dem für verschiedene Innendrücke Informationen über vorher bestimmte Kurven gespeichert sind, wobei eine Kurve einen Zusammenhang zwischen einer Schusskraft und einem Energiemaß umfasst, wobei im Schritt des Lieferns (94) basierend auf dem Ruhe-Innendruck eine Kurve gewählt wird, um basierend auf dem Energiemaß eine Schusskraft, die durch die ausgewählte Kurve angezeigt wird, zu liefern.

13. Computerprogramm mit einem Programmcode zur Durchführung des Verfahrens gemäß Patentanspruch 12, wenn das Programm auf einem Computer abläuft.

## Claims

1. Device for measuring the force of a shot expended on a moveable played object, comprising the following features:
a system (90) for supplying a time curve of an internal pressure of the played object occurring when the played object is impacted by an object;
a system (92) for processing the time curve of the internal pressure in order to obtain an energy measurement as a function of the energy transmitted to the object by the shot, which processing system (92) is programmed to supply information about an internal pressure at rest prior to or after the shot and to integrate a pressure change of the internal pressure over the internal pressure at rest in order to obtain the energy measurement;
a system (94) for supplying information about the force of the shot based on the energy measurement, comprising a memory in which information pertaining to different pressures is stored by means of previously determined curves and a curve plots a correlation between a shot force and an energy measurement, which supply system (94) is programmed to select a curve based on the internal pressure at rest and a shot force based on the energy measurement, which are represented by the selected curve.

2. Device as claimed in claim 1, in which the supply system (90) has a pressure sensor or a receiver mounted on the played object, which is programmed to receive time curves or an energy measurement emanating from the moveable played object.

3. Device as claimed in claim 1 or claim 2, in which the processing system (92) is programmed to integrate the time curve in time and a result of an integration represents the energy measurement.

4. Device as claimed in one of the preceding claims, in which the processing system (92) is programmed to analyse the time curve on the basis of a maximum, a minimum, a shape, and a time duration of a deviance from a normal value in a state of rest in order to obtain the energy measurement.

5. Device as claimed in one of the preceding claims, in which the shot force is a value on a scale of shot forces and the supply system (94) is programmed to map a value of the energy measurement over a value from the scale of shot forces on the basis of a predefined mapping rule.

6. Device as claimed in one of claims 1 to 4, in which the shot force is a function of a distance by which the moveable played object would travel if it were impacted at a specific shot angle, and
the supply system (94) is programmed to calculate the distance on the basis of the energy measurement, the weight of a played object and the friction of a played object in the air.

7. Device as claimed in claim 1,
in which a three-dimensional table is stored in the memory, in which a shot force is assigned to different pairs of internal pressure and energy measurement, and
the supply system (94) is programmed to access the table as a function of the internal pressure and the energy measurement in order to determine the shot force.

8. Device as claimed in one of the preceding claims,
in which the moveable played object is a ball.

9. Device as claimed in claim 1, in which the supply system (94) contains information about different curve groups for different types of played objects (104) and, in addition to the internal pressure and energy measurement, the supply system (94) is also programmed to identify a type of played object on the basis of input information pertaining to the played object type.

10. Device as claimed in claim 9, in which the system (94) for supplying information about the shot force is programmed to obtain information about a played object type by means of a radio signal from the played object.

11. Moveable played object comprising the following features:
a device for measuring the force of a shot expended on the moveable object as claimed in one of claims 1 to 10.

12. Method of measuring the force of a shot expended on a moveable played object, comprising the following steps:
supplying (90) a time curve of an internal pressure of the played object occurring when the played object is impacted by an object;
processing (92) the time curve of the internal pressure in order to obtain an energy measurement which is a function of the energy transmitted to the object by the shot, and the processing step involves supplying information about the internal pressure at rest prior to or after the shot and integrating a pressure change of the internal pressure over the internal pressure at rest in order to obtain the energy measurement;
supplying (94) information about the force of the shot based on the energy measurement using a memory in which information about different internal pressures is stored in previously determined curves, and a curve plots a correlation between a shot force and an energy measurement, and the supply step (94) involves selecting a curve on the basis of the internal pressure at rest in order to supply a shot force based on the energy measurement which is represented by the selected curve.

13. Computer programme with a programme code for implementing the method as claimed in claim 12 when the programme is run on a computer.

## Revendications

1. Dispositif pour mesurer une force de tir exercée sur un accessoire de jeu mobile, présentant les caractéristiques suivantes :
- un dispositif (90) pour fournir une courbe dans le temps, pour une pression interne de l'accessoire, qui apparaît lorsqu'on agit sur celui-ci grâce à un objet ;
- un dispositif (92) pour traiter la courbe dans le temps de ladite pression interne afin d'obtenir un degré d'énergie qui dépend d'une énergie transmise à l'objet par le tir, ce dispositif de traitement (92) étant conçu pour fournir des informations sur une pression interne de repos avant ou après le tir et pour intégrer une variation de pression de la pression interne au-dessus de ladite pression interne de repos, afin d'obtenir le degré d'énergie ;
- un dispositif (94) pour fournir une information sur la force de tir sur la base du degré d'énergie, avec une mémoire dans laquelle sont stockées pour différentes pressions des informations sur des courbes définies préalablement, étant précisé qu'une courbe comprend une relation entre une force de tir et un degré d'énergie, et que le dispositif (94) est conçu pour choisir une courbe sur la base de la pression interne de repos et pour fournir sur la base du degré d'énergie une force de tir qui est indiquée par la courbe sélectionnée.

2. Dispositif selon la revendication 1, dans lequel le dispositif (90) comporte un capteur de pression installé sur un accessoire de jeu, ou un récepteur qui est conçu pour recevoir des courbes dans le temps provenant de l'accessoire de jeu mobile ou un degré d'énergie.

3. Dispositif selon la revendication 1 ou 2, dans lequel le dispositif de traitement (92) est conçu pour intégrer dans le temps la courbe dans le temps, étant précisé qu'un résultat d'une intégration représente le degré d'énergie.

4. Dispositif selon l'une des revendications précédentes, dans lequel le dispositif de traitement (92) est conçu pour examiner sur la courbe de temps un maximum, un minimum, une forme, et une durée dans le temps d'un écart par rapport à une valeur normale dans une position de repos, afin d'obtenir le degré d'énergie.

5. Dispositif selon l'une des revendications précédentes, dans lequel la force de tir est une valeur sur une échelle de force de tir et dans lequel le dispositif (94) est conçu pour représenter une valeur du degré d'énergie sur une valeur de l'échelle de force de tir selon une règle de représentation prédéfinie.

6. Dispositif selon l'une des revendications 1 à 4, dans lequel la force de tir dépend d'une distance sur laquelle l'accessoire de jeu mobile serait projeté si on tapait dedans suivant un angle de tir défini, et dans lequel le dispositif (94) est conçu pour calculer cette distance sur la base du degré d'énergie, d'un poids d'accessoire de jeu et d'un frottement de celui-ci dans l'air.

7. Dispositif selon la revendication 1, dans lequel un tableau tridimensionnel dans lequel une force de tir est associée à différentes paires de pression interne et de degré d'énergie est stocké dans la mémoire,
et dans lequel le dispositif (94) est conçu pour avoir accès au tableau en fonction de la pression interne et du degré d'énergie, afin de déterminer la force de tir.

8. Dispositif selon l'une des revendications précédentes, dans lequel l'accessoire de jeu mobile est constitué par une balle.

9. Dispositif selon la revendication 1, dans lequel le dispositif (94) comporte des informations sur différentes familles de courbes pour différents types d'accessoires de jeu (104), et est conçu pour identifier aussi, en plus de la pression interne et du degré d'énergie, un type d'accessoire de jeu sur la base d'une information de type d'accessoire de jeu entrée.

10. Dispositif selon la revendication 9, dans lequel le dispositif (94) pour fournir une information sur la force de tir est conçu pour obtenir de l'accessoire de jeu une information de type d'accessoire de jeu par l'intermédiaire d'un signal radio.

11. Accessoire de jeu mobile présentant les caractéristiques suivantes :
un dispositif pour mesurer une force de tir exercée sur l'accessoire de jeu mobile, selon l'une des revendications 1 à 10.

12. Procédé pour mesurer une force de tir exercée sur un accessoire de jeu mobile, comprenant les étapes suivantes :
- fourniture (90) d'une courbe dans le temps, pour une pression interne de l'accessoire de jeu, qui apparaît lorsqu'on agit sur celui-ci grâce à un objet ;
- traitement (92) de la courbe dans le temps de ladite pression interne afin d'obtenir un degré d'énergie qui dépend d'une énergie transmise à l'objet par le tir, cette étape de traitement comprenant la fourniture d'informations sur une pression interne de repos avant ou après le tir, et l'intégration d'une variation de pression de la pression interne au-dessus de ladite pression interne de repos, afin d'obtenir le degré d'énergie ;
- fourniture (94) d'une information sur la force de tir sur la base du degré d'énergie, en utilisant une mémoire dans laquelle sont stockées pour différentes pressions internes des informations sur des courbes définies préalablement, étant précisé qu'une courbe comprend une relation entre une force de tir et un degré d'énergie, et que lors de l'étape de la fourniture (94), on choisit une courbe sur la base de la pression interne de repos, afin de fournir sur la base du degré d'énergie une force de tir qui est indiquée par la courbe sélectionnée.

13. Programme informatique avec un code de programme pour la mise en oeuvre du procédé selon la revendication 12, si le programme est exécuté sur un ordinateur.
